# EUROPÄISCHE PATENTANMELDUNG

(11) **EP 4 817 962 A1**
(43) Veröffentlichungstag der Anmeldung: **07.10.2026**
(21) Anmeldenummer: 26165931.2
(22) Anmeldetag: 19.03.2026
(51) Int. Cl.: B60R 16/03

(54) **BORDNETZSYSTEM UND VERFAHREN ZUR BEREITSTELLUNG EINER BORDNETZSPANNUNG**

(30) Priorität: 31.03.2025 DE 102025112400
(71) Anmelder: AUMOVIO Germany GmbH, 60488 Frankfurt am Main (DE)
(72) Erfinder: Frölich, Patrick, 60488 Frankfurt am Main (DE); Ramsauer, Ludwig, 60488 Frankfurt am Main (DE)
(74) Vertreter: Aumovio Corporation

(57) **Zusammenfassung**

Die Erfindung betrifft ein Bordnetzsystem für ein Kraftfahrzeug umfassend eine Gleichspannungsquelle (2), durch die eine Gleichspannung mit einem ersten Spannungslevel (V1) bereitgestellt wird, wobei das Bordnetzsystem (1) zumindest eine elektrische Steuereinheit (3) aufweist, die in einem ersten Betriebszustand des Kraftfahrzeugs mit einer Bordnetzspannung gemäß dem ersten Spannungslevel (V1) betrieben wird, wobei das Bordnetzsystem (1) eine Spannungsreduktionseinheit (4) aufweist, die in einem zweiten Betriebszustand des Kraftfahrzeugs derart ansteuerbar ist, dass die Bordnetzspannung zumindest in einem Teil des Bordnetzes, in dem die elektrische Steuereinheit (3) vorgesehen ist, reduziert ist, so dass an der elektrischen Steuereinheit (3) eine Bordnetzspannung mit einem zweiten Spannungslevel (V2) anliegt, die kleiner ist als das erste Spannungslevel (V1).

## Beschreibung

Die Erfindung betrifft allgemein das Gebiet der Bordnetzsysteme von Kraftfahrzeugen. Insbesondere betrifft die vorliegende Erfindung ein Bordnetzsystem und ein Verfahren zur Bereitstellung einer Bordnetzspannung in einem Bordnetzsystem, bei dem die Bordnetzspannung betriebszustandsabhängig reduziert wird.

Es ist bekannt, dass Kraftfahrzeuge ein Bordnetzsystem mit einer Gleichspannungsquelle in Form einer Bordnetzbatterie aufweisen, die ein Bordnetz des Kraftfahrzeugs mit Gleichspannung versorgt. Bisherige Bordnetze weisen eine Nennspannung von 12V auf. Zukünftig ist es geplant, die Bordnetzspannung auf 48V anzuheben.

Problematisch dabei ist, dass das 48V-Bordnetz auch im Parkzustand oder im Ruhezustand des Fahrzeugs Energie bereitstellen muss, beispielsweise für Steuergeräte, die auch im Ruhezustand eine Grundfunktionalität bereitstellen. Dies gilt beispielsweise für ein Steuergerät, das die Schließfunktion oder die Parkbremsfunktion des Fahrzeugs steuert.

Aufgrund des höheren Spannungsniveaus fließen größere Leckströme, was zu höheren Verlustleistungen führt.

Ausgehend hiervon ist es Aufgabe der Erfindung, ein Bordnetzsystem anzugeben, in dem die durch Leckströme entstehenden Verlustleistungen trotz erhöhter Bordnetzspannung limitiert sind.

Die Aufgabe wird durch ein Bordnetzsystem mit den Merkmalen des unabhängigen Patentanspruchs 1 gelöst. Ein Verfahren zur Bereitstellung einer Bordnetzspannung ist Gegenstand des nebengeordneten Patentanspruchs 13. Bevorzugte Ausführungsformen sind Gegenstand der Unteransprüche.

Gemäß einem ersten Aspekt wird ein Bordnetzsystem für ein Kraftfahrzeug offenbart. Das Bordnetzsystem umfasst eine Gleichspannungsquelle, durch die eine Gleichspannung mit einem ersten Spannungslevel bereitgestellt wird. Das Bordnetzsystem weist zumindest eine elektrische Steuereinheit auf, die in einem ersten Betriebszustand des Kraftfahrzeugs mit einer Bordnetzspannung gemäß dem ersten Spannungslevel betrieben wird. Das Bordnetzsystem weist eine Spannungsreduktionseinheit auf, die in einem zweiten Betriebszustand des Kraftfahrzeugs derart ansteuerbar ist, dass die Bordnetzspannung zumindest in einem Teil des Bordnetzes, in dem die elektrische Steuereinheit vorgesehen ist, reduziert ist. Dadurch liegt an der elektrischen Steuereinheit eine Bordnetzspannung mit einem zweiten Spannungslevel an, die kleiner ist als das erste Spannungslevel.

Die Erfindung bietet den technischen Vorteil, dass durch das Absenken der Bordnetzspannung die elektrischen Verluste, die aufgrund von parasitären Effekten entstehen, reduziert werden können und damit der Energieverbrauch des Fahrzeugs verringert ist. Dies ist insbesondere bei langen Stillstandzeiten des Fahrzeugs vorteilhaft, da eine übermäßige Entleerung der Gleichspannungsquelle verhindert wird.

Gemäß einem Ausführungsbeispiel ist die Nennspannung des ersten Spannungslevels 48V oder im Wesentlichen 48V. In anderen Worten wird die Steuereinheit im ersten Betriebszustand des Fahrzeugs mit einer Nennspannung von 48V betrieben. Im Falle einer 48V Bordnetzspannung sind die elektrischen Verluste, die durch parasitäre Effekte entstehen, höher als beispielsweise in 12V-Bordnetzen, so dass die Absenkung der Bordnetzspannung hier besonders vorteilhaft ist. Es sei darauf hingewiesen, dass die Steuereinheit vorzugsweise keine Steuereinheit eines elektrischen Antriebs ist, beispielsweise eines elektrischen Antriebs eines Mild-Hybrid-Systems sondern ein Steuergerät, das auch im Ruhezustand des Fahrzeugs mit Spannung versorgt werden muss.

Gemäß einem Ausführungsbeispiel liegt die Nennspannung des zweiten Spannungslevels im Bereich zwischen 24V und 40V. Die Nennspannung im zweiten Betriebszustand des Fahrzeugs wird vorzugsweise derart gewählt, dass das Steuergerät in diesem zweiten Betriebszustand des Fahrzeugs auch noch zumindest Teilfunktionen bereitstellt. Dies ist gemäß dem Standard ISO-21780 für Absenkungen bis 24V der Fall. Eine derartige Absenkung der Bordnetzspannung bietet den Vorteil, dass die elektrischen Verluste signifikant reduziert werden.

Gemäß einem Ausführungsbeispiel umfasst die Spannungsreduktionseinheit eine Schalteinheit, die mit einer Gleichspannungsquelle in Form einer Bordnetzbatterie, die eine Nennspannung von 48V aufweist, gekoppelt oder in diese integriert ist. Die Bordnetzbatterie weist einen ersten Batteriepol als Pluspol, einen zweiten Batteriepol als Massepol sowie einen Mittelabgriff auf. Durch den Mittelabgriff wird das zweite Spannungslevel bereitgestellt. Durch diese Form der Spannungsreduktionseinheit wird eine Reduktion der Bordnetzspannung in technisch einfacher Weise und mit geringen elektrischen Verlusten ermöglicht.

Gemäß einem Ausführungsbeispiel bewirkt die Schalteinheit ein Umschalten zwischen einer elektrischen Verbindung mit dem ersten Batteriepol und einer elektrischen Verbindung mit dem Mittelabgriff. In dem ersten Schaltzustand, in dem der Ausgang der Schalteinheit mit dem ersten Batteriepol elektrisch gekoppelt ist, wird eine Bordnetzspannung gemäß dem ersten Spannungslevel bereitgestellt. In dem zweiten Schaltzustand hingegen, in dem der Ausgang der Schalteinheit mit dem Mittelabgriff elektrisch gekoppelt ist, wird eine Bordnetzspannung gemäß dem zweiten Spannungslevel, d.h. eine reduzierte Bordnetzspannung bereitgestellt. Dadurch kann eine Spannungsreduktion mit geringen elektrischen Verlusten erreicht werden.

Gemäß einem Ausführungsbeispiel weist die Spannungsreduktionseinheit einen DC-DC-Wandler auf. Der DC-DC-Wandler kann in die Gleichspannungsquelle des Fahrzeugs integriert sein oder aber abgesetzt davon vorgesehen sein, beispielsweise um lediglich einen Teilbereich des Bordnetzes mit einer reduzierten Betriebsspannung zu versorgen.

Gemäß einem Ausführungsbeispiel ist die Spannungsreduktionseinheit in eine Antriebsbatterie des Fahrzeugs integriert. Die Bordnetzspannung mit dem ersten und zweiten Spannungslevel wird dabei von dieser Antriebsbatterie bereitgestellt. Dadurch ist es möglich, dass die Funktionalität der Bordnetzbatterie von der Antriebsbatterie erbracht wird. Damit wird ein einfacher Aufbau des Fahrzeugs erreicht. Vorzugsweise ist in diesem Fall keine Bordnetzbatterie als separate Batterie neben der Antriebsbatterie vorgesehen ist.

Gemäß einem Ausführungsbeispiel ist der DC-DC-Wandler mit einer Bordnetzbatterie des Fahrzeugs gekoppelt, die eine Nennspannung von 48V oder im Wesentlichen 48V aufweist. Der DC-DC-Wandler ist zur Herabsetzung der Bordnetzspannung vom ersten Spannungslevel auf das zweite Spannungslevel ausgebildet. Damit kann die Betriebsspannung einer 48V-Bordnetzbatterie auf ein gewünschtes Spannungslevel abgesenkt werden, und zwar ohne asymmetrische Belastung, wie dies beispielsweise bei einem Mittelabgriff an der Bordnetzbatterie der Fall ist.

Gemäß einem Ausführungsbeispiel ist der zweite Betriebszustand des Fahrzeugs ein Ruhezustand und/oder ein Parkzustand. Die Absenkung der Bordnetzspannung ist im Ruhezustand und/oder Parkzustand besonders vorteilhaft, weil dadurch auch bei langen Stillstandzeiten des Fahrzeugs die Entladung der Gleichspannungsquelle (d.h. der Bordnetzbatterie oder der Antriebsbatterie) reduziert ist.

Gemäß einem Ausführungsbeispiel ist die Reduktion der Bordnetzspannung auf das zweite Spannungslevel parametrisierbar, und zwar derart, dass die Bordnetzspannung auf das zweite Spannungslevel reduziert wird, wenn neben dem Einnehmen des Parkzustands und/oder Ruhezustands des Fahrzeugs zumindest eine weitere Bedingung erfüllt ist. Eine Bedingung kann beispielsweise die Zeitdauer sein, in der sich das Fahrzeug im Ruhezustand und/oder im Parkzustand befindet. Eine andere oder zusätzliche Bedingung kann beispielsweise der Ladezustand der Gleichspannungsquelle sein. Damit kann abhängig von bestimmten Parametern eine Absenkung der Bordnetzspannung bewirkt werden.

Gemäß einem Ausführungsbeispiel weist das Bordnetz des Fahrzeugs mehrere Bordnetzabschnitte auf. Die Reduktion der Bordnetzspannung auf das zweite Spannungslevel erfolgt lediglich in einem Teil der Bordnetzabschnitte. Dadurch ist es beispielsweise möglich, lediglich in denjenigen Bereichen des Bordnetzes eine Absenkung der Bordnetzspannung zu bewirken, die in dem zweiten Betriebszustand mit elektrischer Energie zu versorgende Komponenten aufweist.

Gemäß einem weiteren Aspekt wird ein Fahrzeug offenbart. Das Fahrzeug weist ein Bordnetzsystem gemäß einem der zuvor beschriebenen Ausführungsformen auf.

Gemäß einem nochmals weiteren Aspekt wird ein Verfahren zur Bereitstellung einer Bordnetzspannung in einem Bordnetzsystem eines Kraftfahrzeugs offenbart. Das Bordnetzsystem weist eine Gleichspannungsquelle auf, durch die eine Gleichspannung mit einem ersten Spannungslevel bereitgestellt wird. Das Bordnetzsystem umfasst zumindest eine elektrische Steuereinheit, die in einem ersten Betriebszustand des Kraftfahrzeugs mit einer Bordnetzspannung gemäß dem ersten Spannungslevel betrieben wird. Das Bordnetzsystem weist eine Spannungsreduktionseinheit auf, mittels der die Bordnetzspannung reduzierbar ist. Das Verfahren umfasst die folgenden Schritte:
- Empfangen einer Information, dass das Kraftfahrzeug einen vom ersten Betriebszustand verschiedenen zweiten Betriebszustand eingenommen hat;
- Ansteuern der Spannungsreduktionseinheit;
- Reduzieren der Bordnetzspannung zumindest in einem Teil des Bordnetzes, in dem die elektrische Steuereinheit vorgesehen ist, so dass an der elektrischen Steuereinheit eine Bordnetzspannung mit einem zweiten Spannungslevel anliegt, die kleiner ist als das erste Spannungslevel.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: beispielhaft eine schematische Darstellung eines Bordnetzsystems gemäß einem ersten Ausführungsbeispiel;
- Fig. 2: beispielhaft eine schematische Darstellung eines Bordnetzsystems gemäß einem zweiten Ausführungsbeispiel;
- Fig. 3: beispielhaft eine schematische Darstellung eines Bordnetzsystems gemäß einem dritten Ausführungsbeispiel; und
- Fig. 4: beispielhaft ein Blockdiagramm, das die Verfahrensschritte eines Verfahrens zur Bereitstellung einer Bordnetzspannung offenbart.

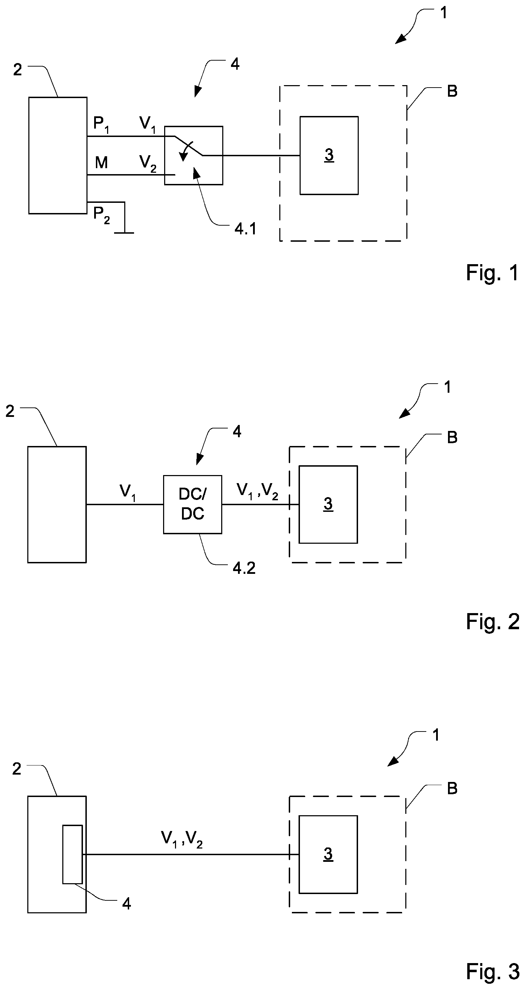

Figur 1 zeigt beispielhaft und grob schematisch ein Bordnetzsystem 1. Das Bordnetzsystem 1 umfasst ein Bordnetz B eines Kraftfahrzeugs, das elektrische Verbraucher des Fahrzeugs mit elektrischer Energie versorgt. Das Bordnetz B weist eine Gleichspannungsquelle 2 auf, über die das Bordnetz B mit einer Gleichspannung versorgt wird, die ein erstes Spannungslevel V1 aufweist. Vorzugsweise weist das Fahrzeug ein Bordnetz B auf, das zumindest im aktiven Betrieb des Fahrzeugs fahrzeugweit die gleiche Nennspannung aufweist. Diese Nennspannung beträgt vorzugsweise 48V. In anderen Worten sind keine Teilbordnetze vorgesehen, die im aktiven Betrieb des Fahrzeugs mit unterschiedlichen Spannungslevel betrieben werden, beispielsweise einem ersten Teilbordnetz, das bei einer Nennspannung von 12V betrieben wird und einem zweiten Teilbordnetz, das bei einer Nennspannung von 48V betrieben wird, wie dies beispielsweise bei Mild-Hybrid-Fahrzeugen der Fall ist.

Das Bordnetz B umfasst eine elektrische Steuereinheit 3, die zumindest im aktiven Betrieb des Fahrzeugs mit einer Gleichspannung gemäß dem ersten Spannungslevel V1 versorgt wird. Die elektrische Steuereinheit 3 kann insbesondere ein Steuergerät sein, das Fahrzeugfunktionen auch im Ruhezustand oder Parkzustand des Fahrzeugs bereitstellt. Dies ist beispielsweise bei Steuergeräten für die Feststellbremse oder die Fahrzeugverriegelung der Fall.

Das Bordnetzsystem 1 umfasst zudem eine Gleichspannungsquelle 2, die dazu ausgebildet ist, eine Gleichspannung mit einer Nennspannung gemäß dem ersten Spannungslevel V1 bereitzustellen. Diese Nennspannung beträgt vorzugsweise 48V.

Des Weiteren umfasst das Bordnetzsystem 1 eine Spannungsreduktionseinheit 4. Die Spannungsreduktionseinheit 4 weist einen Steuereingang auf, über den der Spannungsreduktionseinheit 4 eine Steuerinformation zuführbar ist. Über den Steuereingang lässt sich die Spannungsreduktionseinheit 4 derart ansteuern, dass die Bordnetzspannung zumindest in einem Teil des Bordnetzes B reduziert wird. Damit wird die elektrische Spannung, die der elektrischen Steuereinheit 3 bereitgestellt wird, reduziert, und zwar auf ein zweites Spannungslevel V2, das kleiner ist als das erste Spannungslevel V1.

Im gezeigten Ausführungsbeispiel ist die Gleichspannungsquelle 2 eine Bordnetzbatterie, die einen ersten Batteriepol P1 und einen zweiten Batteriepol P2 aufweist. Die Nennspannung der Bordnetzbatterie zwischen dem ersten und zweiten Batteriepol P1, P2 beträgt vorzugsweise 48V.

Die Bordnetzbatterie weist vorzugsweise zudem einen Mittelabgriff M auf. Unter "Mittelabgriff" im Sinne der vorliegenden Erfindung kann ein symmetrischer oder aber unsymmetrischer Abgriff an den Batteriezellen gemeint sein, d.h. der Abgriff teilt die Batterie in zwei Bereiche mit gleicher Zellenanzahl oder in zwei Bereiche mit unterschiedlicher Zellenanzahl.

Der Mittelabgriff M kann beispielsweise ein externer Pol sein oder aber im Inneren der Bordnetzbatterie vorgesehen sein. Falls der Mittelabgriff M im Inneren der Bordnetzbatterie realisiert ist, kann die Spannungsreduktionseinheit 4 ebenfalls im Inneren der Bordnetzbatterie vorgesehen sein.

An dem Mittelabgriff M wird das zweite Spannungslevel V2 bereitgestellt, d.h. die Nennspannung der Bordnetzbatterie zwischen dem Mittelabgriff M und dem zweiten Batteriepol P2 weist die Spannung V2 auf. Das zweite Spannungslevel V2 kann beispielsweise im Bereich von 24V bis 40V, insbesondere im Bereich 24V bis 36V, besonders bevorzugt im Bereich 24V bis 31V liegen.

Die Spannungsreduktionseinheit 4 weist im gezeigten Ausführungsbeispiel eine Schalteinheit 4.1 auf. Diese Schalteinheit 4.1 umfasst einen ersten Eingang, der mit dem ersten Batteriepol P1 gekoppelt ist. Zudem umfasst die Schalteinheit 4.1 einen zweiten Eingang, der mit dem Mittelabgriff M gekoppelt ist. Die Schalteinheit 4.1 weist Schaltmittel auf, über die ein Umschalten zwischen dem ersten und zweiten Eingang bewirkbar ist, so dass entweder der erste oder der zweite Eingang der Schalteinheit 4.1 elektrisch mit dem Ausgang der Schalteinheit 4.1 koppelbar ist.

Damit ist es durch das Schalten der Schalteinheit 4.1 der Spannungsreduktionseinheit 4 möglich, dass das Bordnetz B zumindest in einem Bordnetzteilbereich in einem ersten Betriebszustand des Fahrzeugs mit einer Bordnetzspannung mit einem ersten Spannungslevel V1 und in einem zweiten Betriebszustand des Fahrzeugs mit einem zweiten Spannungslevel V2 und damit mit einer reduzierten Bordnetzspannung versorgt wird.

Der erste Betriebszustand des Fahrzeugs ist dabei insbesondere ein Zustand, in dem das Fahrzeug aktiviert und fahrbereit ist, d.h. sich das Fahrzeug nicht im Parkzustand oder Ruhezustand befindet. Der zweite Betriebszustand ist vorzugsweise ein Ruhezustand oder Parkzustand, in dem das Fahrzeug deaktiviert und nicht fahrbereit ist. Insbesondere kann der zweite Betriebszustand auch dadurch gekennzeichnet sein, dass das Fahrzeug verriegelt ist.

Die Spannungsreduktionseinheit 4 kann die Bordnetzspannung unmittelbar nach dem Eintreten des zweiten Betriebszustands reduzieren. Alternativ ist es möglich, die Reduktion der Bordnetzspannung zu parametrisieren, d.h. abhängig von einer oder mehreren Bedingungen zu machen. Eine Bedingung kann beispielsweise der Ablauf einer Zeitspanne sein. D.h. die Spannungsreduktion kann insbesondere dann vollzogen werden, wenn das Fahrzeug in dem zweiten Betriebszustand ist und beispielsweise eine vorgegebene Zeitdauer verstrichen ist, oder die Spannung der Gleichspannungsquelle 2 eine vorgegebene Schwelle unterschreitet.

Es versteht sich, dass die Absenkung der Bordnetzspannung in dem gesamten Bordnetz B des Fahrzeugs erfolgen kann oder lediglich in einem Teilbereich des Bordnetzes B.

Die Reduktion der Bordnetzspannung hat den Vorteil, dass die elektrischen Verluste, die durch parasitäre Widerstände oder sonstige Leckströme entstehen, reduziert werden, da bei einer geringeren Bordnetzspannung die Leckströme reduziert werden können. Damit kann auch bei langen Stillstandzeiten des Fahrzeugs eine übermäßige Entladung der Gleichspannungsquelle 2 verhindert werden. Die im Bordspannungsnetz vorgesehenen Lasten, insbesondere die Steuergeräte, sind gemäß dem internationalen Standard ISO 21780 dazu konfiguriert, deren Funktionalität auch bei verringerter Bordnetzspannung bereitzustellen. Damit ist es möglich, trotz der Bordnetzspannungsreduktion die im zweiten Betriebszustand des Fahrzeugs zu realisierenden Fahrzeugfunktionen aufrechtzuerhalten.

Fig. 2 zeigt beispielhaft und grob schematisch eine weitere Ausführungsform eines Bordnetzsystems 1. Nachfolgend werden lediglich die Unterschiede gegenüber der Ausführungsform der Fig. 1 beschrieben. Im Übrigen gelten die vorherigen Ausführungen auch für diese Ausführungsform.

Der wesentliche Unterschied der Ausführungsform gemäß Fig. 2 zur Ausführungsform gemäß Fig. 1 besteht darin, dass die Gleichspannungsquelle 2 keinen Mittelabgriff aufweist. Damit kann die Gleichspannungsquelle 2 lediglich eine Bordnetzspannung gemäß dem ersten Spannungslevel bereitstellen.

Zur Reduktion der Bordnetzspannung weist das Bordnetzsystem 1 eine Spannungsreduktionseinheit 4 auf, die als DC-DC-Wandler 4.2 ausgebildet ist. Der DC-DC-Wandler 4.2 weist einen Eingang auf, an dem eine Bordnetzspannung mit dem ersten Spannungslevel V1 anliegt. Der DC-DC-Wandler 4.2 ist dazu konfiguriert, die Bordnetzspannung vom ersten Spannungslevel V1 auf das zweite Spannungslevel V2 herabzusetzen. Damit kann bei aktiver Reduktion der Bordnetzspannung am Ausgang des DC-DC-Wandlers 4.2 eine Ausgangsspannung gemäß dem zweiten Spannungslevel V2 bereitgestellt und die elektrische Steuereinheit des Bordnetzes B mit dem zweiten Spannungslevel V2 betrieben werden.

Fig. 3 zeigt beispielhaft und grob schematisch eine nochmals weitere Ausführungsform eines Bordnetzsystems 1. Nachfolgend werden lediglich die Unterschiede gegenüber den Ausführungsformen der Fig. 1 und 2 beschrieben. Im Übrigen gelten die vorherigen Ausführungen auch für diese Ausführungsform.

Im Unterschied zu den vorherigen Ausführungsformen ist die Spannungsreduktionseinheit 4 nicht außerhalb der Gleichspannungsquelle 2 vorgesehen, sondern in diese Gleichspannungsquelle 2 integriert. Die Spannungsreduktionseinheit 4 kann dabei eine Schalteinheit 4.1 sein, die zwischen einem Plus-Pol und einem Mittelabgriff umschaltet und damit an einer externen Kontaktstelle der Gleichspannungsquelle 2 je nach Schaltzustand eine Bordnetzspannung mit einem ersten Spannungslevel V1 oder mit einem zweiten Spannungslevel V2 bereitstellt.

Alternativ kann die Gleichspannungsquelle 2 einen integrierten DC-DC-Wandler 4.2 aufweisen. Der DC-DC-Wandler 4.2 ist dazu konfiguriert, eine Umsetzung der Bordnetzspannung vom ersten Spannungslevel V1 auf das zweite Spannungslevel V2 zu bewirken. Beispielsweise kann der DC-DC-Wandler 4.2 eine Gleichspannung mit einer Nennspannung von 48V auf eine Gleichspannung mit einer Nennspannung im Bereich von 24V bis 40V, insbesondere im Bereich von 24V bis 36V, besonders bevorzugt im Bereich von 24V bis 31V umsetzen.

Die Gleichspannungsquelle 2 kann eine Bordnetzbatterie sein, die als erstes Spannungslevel V1 eine Nennspannung von 48V abgibt. Alternativ kann die Gleichspannungsquelle 2 auch eine Antriebsbatterie eines elektrisch antreibbaren Fahrzeugs (BEV: engl. battery electric vehicle oder PHEV: engl. plug-in hybrid electric vehicle) sein. Eine Antriebsbatterie weist beispielsweise ein Nennspannung im Bereich zwischen 400V und 1000V auf. Die Antriebsbatterie kann durch eine Spannungsreduktionseinheit 4 in Form eines DC/DC-Wandlers 4.2 eine Bordnetzspannung für das Fahrzeug bereitstellen. Der DC/DC-Wandler kann dazu konfiguriert sein, im ersten Betriebszustand des Fahrzeugs eine Bordnetzspannung gemäß dem ersten Spannungslevel, beispielsweise 48V, und im zweiten Betriebszustand eine reduzierte Bordnetzspannung gemäß dem zweiten Spannungslevel, im Bereich von 24V bis 40V, insbesondere im Bereich von 24V bis 36V, besonders bevorzugt im Bereich von 24V bis 31V bereitzustellen. Damit ist es möglich, dass die Antriebsbatterie die Bordnetzspannung bereitstellt, so dass das Fahrzeug zur Bereitstellung der Bordnetzspannung keine Bordnetzbatterie aufweisen muss.

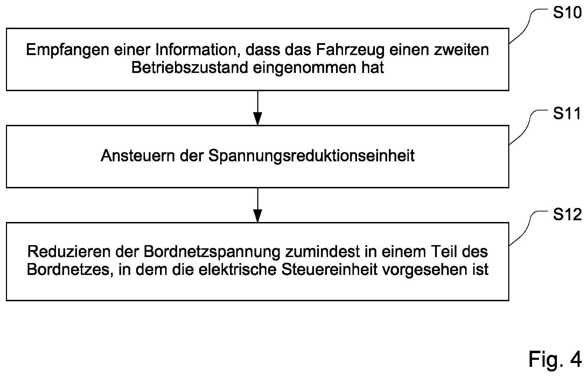

Fig. 4 zeigt ein Blockdiagramm, das die Verfahrensschritte eines Verfahrens zur Bereitstellung einer Bordnetzspannung in einem Bordnetzsystem 1 eines Fahrzeugs veranschaulicht.

Zunächst wird eine Information empfangen, dass das Fahrzeug einen vom ersten Betriebszustand verschiedenen zweiten Betriebszustand eingenommen hat (S10). Beispielsweise kann das Fahrzeug von einem fahrbereiten Zustand als ersten Zustand in einen Park- oder Ruhezustand als zweiten Betriebszustand versetzt worden sein.

Nach dem Empfangen der Information, dass das Fahrzeug den zweiten Betriebszustand eingenommen hat, wird die Spannungsreduktionseinheit angesteuert (S11). Dies kann unmittelbar nach der Einnahme des zweiten Betriebszustands erfolgen oder aber an eine oder mehrere Bedingungen geknüpft sein. Eine Bedingung kann beispielsweise sein, dass der Park- oder Ruhezustand seit einer gewissen Zeitdauer vorliegt.

Zuletzt wird die Bordnetzspannung zumindest in einem Teil des Bordnetzes, in dem die elektrische Steuereinheit vorgesehen ist, reduziert, so dass an der elektrischen Steuereinheit eine Bordnetzspannung mit einem zweiten Spannungslevel anliegt, die kleiner ist als das erste Spannungslevel (S12).

Die Erfindung wurde voranstehend an Ausführungsbeispielen beschrieben. Es versteht sich, dass zahlreiche Änderungen sowie Abwandlungen möglich sind, ohne dass dadurch der durch die Patentansprüche definierte Schutzbereich verlassen wird.

### Bezugszeichenliste

- 1: Bordnetzsystem
- 2: Gleichspannungsquelle
- 3: elektrische Steuereinheit
- 4: Spannungsreduktionseinheit
- 4.1: Schalteinheit
- 4.2: DC-DC-Wandler

- B: Bordnetz
- P₁: erster Batteriepol
- P₂: zweiter Batteriepol
- M: Mittelabgriff
- V₁: erstes Spannungslevel
- V₂: zweites Spannungslevel

## Patentansprüche

1. Bordnetzsystem für ein Kraftfahrzeug umfassend eine Gleichspannungsquelle (2), durch die eine Gleichspannung mit einem ersten Spannungslevel (V1) bereitgestellt wird, wobei das Bordnetzsystem (1) zumindest eine elektrische Steuereinheit (3) aufweist, die in einem ersten Betriebszustand des Kraftfahrzeugs mit einer Bordnetzspannung gemäß dem ersten Spannungslevel (V1) betrieben wird, wobei das Bordnetzsystem (1) eine Spannungsreduktionseinheit (4) aufweist, die in einem zweiten Betriebszustand des Kraftfahrzeugs derart ansteuerbar ist, dass die Bordnetzspannung zumindest in einem Teil des Bordnetzes, in dem die elektrische Steuereinheit (3) vorgesehen ist, reduziert ist, so dass an der elektrischen Steuereinheit (3) eine Bordnetzspannung mit einem zweiten Spannungslevel (V2) anliegt, die kleiner ist als das erste Spannungslevel (V1).

2. Bordnetzsystem nach Anspruch 1, **dadurch gekennzeichnet, dass** die Nennspannung des ersten Spannungslevels (V1) 48V oder im Wesentlichen 48V ist.

3. Bordnetzsystem nach Anspruch 1 oder 2, **dadurch gekennzeichnet, dass** die Nennspannung des zweiten Spannungslevels (V2) im Bereich zwischen 24V und 40V liegt.

4. Bordnetzsystem nach einem der vorhergehenden Ansprüche, **dadurch gekennzeichnet, dass** die Spannungsreduktionseinheit (4) eine Schalteinheit (4.1) umfasst, die mit einer Gleichspannungsquelle (2) in Form einer Bordnetzbatterie, die eine Nennspannung von 48V aufweist, gekoppelt oder in diese integriert ist, wobei die Bordnetzbatterie einen ersten Batteriepol (P1) als Pluspol, einen zweiten Batteriepol (P2) als Massepol sowie einen Mittelabgriff (M) aufweist, wobei über den Mittelabgriff (M) das zweite Spannungslevel bereitstellbar ist.

5. Bordnetzsystem nach Anspruch 4, **dadurch gekennzeichnet, dass** die Schalteinheit (4.1) ein Umschalten zwischen einer elektrischen Verbindung mit dem ersten Batteriepol (P1) und einer elektrischen Verbindung mit dem Mittelabgriff (M) bewirkt.

6. Bordnetzsystem nach einem der Ansprüche 1 bis 3, **dadurch gekennzeichnet, dass** die Spannungsreduktionseinheit (4) einen DC-DC-Wandler (4.2) aufweist.

7. Bordnetzsystem nach Anspruch 6, **dadurch gekennzeichnet, dass** die Spannungsreduktionseinheit (4) in eine Antriebsbatterie des Kraftfahrzeugs integriert ist und die Bordnetzspannung mit dem ersten und zweiten Spannungslevel (V1, V2) von dieser Antriebsbatterie bereitgestellt wird.

8. Bordnetzsystem nach Anspruch 7, **dadurch gekennzeichnet, dass** keine Bordnetzbatterie als separate Batterie neben der Antriebsbatterie vorgesehen ist.

9. Bordnetzsystem nach Anspruch 6, **dadurch gekennzeichnet, dass** der DC-DC-Wandler (4.2) mit einer Bordnetzbatterie des Kraftfahrzeugs gekoppelt ist, die eine Nennspannung von 48V oder im Wesentlichen 48V aufweist und dass der DC-DC-Wandler (4.2) zur Herabsetzung der Bordnetzspannung vom ersten Spannungslevel (V1) auf das zweite Spannungslevel (V2) ausgebildet ist.

10. Bordnetzsystem nach einem der vorhergehenden Ansprüche, **dadurch gekennzeichnet, dass** der zweite Betriebszustand des Kraftfahrzeugs ein Ruhezustand und/oder ein Parkzustand ist.

11. Bordnetzsystem nach Anspruch 10, **dadurch gekennzeichnet, dass** die Reduktion auf das zweite Spannungslevel (V2) parametrisierbar ist, und zwar derart, dass die Bordnetzspannung auf das zweite Spannungslevel (V2) reduziert wird, wenn neben dem Einnehmen des Parkzustands und/oder Ruhezustands des Kraftfahrzeugs zumindest eine weitere Bedingung erfüllt ist.

12. Bordnetzsystem nach einem der vorhergehenden Ansprüche, **dadurch gekennzeichnet, dass** das Bordnetz des Kraftfahrzeugs mehrere Bordnetzabschnitte aufweist und die Reduktion der Bordnetzspannung auf das zweite Spannungslevel (V2) lediglich in einem Teil der Bordnetzabschnitte erfolgt.

13. Kraftfahrzeug umfassend ein Bordnetzsystem gemäß einem der vorhergehenden Ansprüche.

14. Verfahren zur Bereitstellung einer Bordnetzspannung in einem Bordnetzsystem (1) eines Kraftfahrzeugs, wobei das Bordnetzsystem (1) eine Gleichspannungsquelle (2) aufweist, durch die eine Gleichspannung mit einem ersten Spannungslevel (V1) bereitgestellt wird, wobei das Bordnetzsystem (1) zumindest eine elektrische Steuereinheit (3) aufweist, die in einem ersten Betriebszustand des Kraftfahrzeugs mit einer Bordnetzspannung gemäß dem ersten Spannungslevel (V1) betrieben wird, wobei das Bordnetzsystem eine Spannungsreduktionseinheit (4) aufweist, wobei das Verfahren die folgenden Schritte umfasst:
- Empfangen einer Information, dass das Kraftfahrzeug einen vom ersten Betriebszustand verschiedenen zweiten Betriebszustand eingenommen hat (S10);
- Ansteuern der Spannungsreduktionseinheit (4) (S11);
- Reduzieren der Bordnetzspannung zumindest in einem Teil des Bordnetzes, in dem die elektrische Steuereinheit (3) vorgesehen ist, so dass an der elektrischen Steuereinheit (3) eine Bordnetzspannung mit einem zweiten Spannungslevel (V2) anliegt, die kleiner ist als das erste Spannungslevel (V1) (S12).
